# EUROPÄISCHE PATENTSCHRIFT

(11) **EP 0 343 431 B1**
(45) Veröffentlichungstag und Bekanntmachung des Hinweises auf die Patenterteilung: **25.08.1993**
(21) Anmeldenummer: 89108414.7
(22) Anmeldetag: 10.05.1989
(51) Int. Cl.: F26B 23/00, C02F 11/00

(54) **Verfahren und Einrichtung zum Trocknen von Klärschlamm**
Process and apparatus for sewage sludge drying
Procédé et dispositif pour sécher des bones d'eaux d'égout

(30) Priorität: 24.05.1988 DE 3817609
(43) Veröffentlichungstag der Anmeldung: 29.11.1989
(73) Patentinhaber: SIEMENS AKTIENGESELLSCHAFT, 80333 München (DE)
(72) Erfinder: Bege, Dietmar, D-8520 Erlangen (DE); Meininger, Siegfried, Dipl.-Ing. (FH), D-8520 Erlangen (DE)

(56) Entgegenhaltungen:
- EP-A- 0 088 174
- CH-A- 95 364
- DE-A- 2 902 323
- DE-A- 2 929 486
- DE-C- 278 860
- FR-A- 1 176 841
- GB-A- 2 135 034
- US-A- 3 805 715
- US-A- 3 953 927

## Beschreibung

Die Erfindung betrifft ein Verfahren zum Trocknen von Klärschlamm, wobei beim Trocknen des Klärschlammes entweichender Dampf abgeleitet und einem Kompressor zugeleitet wird und wobei Wärmeenergie des komprimierten und dadurch erhitzten Dampf es dem zu trocknenden Klärschlamm über ein Wärmetauschersystem zugeführt und dort Kondensat abgeleitet wird. Sie betrifft außerdem eine Einrichtung zur Durchführung des Verfahrens.

In kommunalen, wie industriellen Kläranlagen fällt Klärschlamm an, der beseitigt werden muß. In der Vergangenheit wurde Klärschlamm als Düngemittel auf landwirtschaftlich genutzte Flächen verbracht. Dieser Weg ist versperrt für Klärschlamm, der einen hohen Gehalt an Schadstoffen aufweist. Beispielsweise sind im Klärschlamm Quecksilber, Cadmium oder Blei enthalten. Die Ablagerung von Klärschlamm auf Deponien bereitet Schwierigkeiten, da große Mengen an Klärschlamm zur Destabilisierung des Deponiekörpers beitragen. Es sind daher sehr viele Deponien notwendig.

Eine geeignete Lösung zur Beseitigung von Klärschlamm ist die Herstellung von Öl und Fettsäuren aus Klärschlamm, die Verbrennung sowie andere Verfahren. Dazu ist es erforderlich, daß der Klärschlamm, der einen hohen Wasseranteil hat, zuvor getrocknet wird. Eine mechanische Entwässerung reicht nicht aus, um einen brennbaren Stoff zu bekommen. Bekannte Spezialöfen erfordern daher die Zugabe von heizwertreichen Stoffen oder sogar von Primärbrennstoff zum entwässerten Klärschlamm, damit eine Verbrennung überhaupt möglich wird. Der Heizwert des bisher vorliegenden bearbeiteten Klärschlammes reicht für eine Verbrennung nicht aus.

Auch die Verwendung von Klärschlamm zur Gewinnung von Öl setzt zunächst eine Trocknung voraus.

Aus der EP-A- 0 088 174 ist ein Trocknungsverfahren bekannt, bei dem Kondensat zur Unterstützung eines Trocknungsvorganges eingesetzt werden kann.

Aus der CH-A- 95 364 ist ebenfalls ein Trocknungsverfahren bekannt. Dabei wird Kondensat zum Vorwärmen einer zu trocknenden Substanz eingesetzt. Dabei wird von der zu trocknenden Substanz kein Gas abgegeben. Das wird dadurch deutlich, daß keine Gasableitung vorgesehen ist.

Der Erfindung lag die Aufgabe zugrunde, ein Verfahren zu entwickeln, das auf einfache Weise, ohne Zusatz weiteren Brennstoffes eine weitgehende Trocknung von Klärschlamm ermöglicht. Die getrocknete Masse soll dann mit einfachen Mitteln und ohne Zugabe von brennbaren Stoffen allein aufgrund ihres eigenen Heizwertes gut zu verbrennen sein. Weiterhin soll eine Einrichtung zur Durchführung des Verfahrens angegeben werden.

Die erstgenannte Aufgabe, ein geeignetes Verfahren zum Trocknen von Klärschlamm zu entwickeln, wird gemäß der Erfindung dadurch gelöst, daß vor dem Trocknen selbst eine Vorentgasung stattfindet und daß das Kondensat aufgefangen wird und daß Wärmeenergie des Kondensats zur Unterstützung dieser Vorentgasung dem Klärschlamm vor der Trocknung zugeführt wird.

Erst dadurch weist der bei der Trockung entweichende und dann verdichtete Dampf ein ausreichendes Temperaturniveau und eine ausreichende Wärmeübertragungsleistung für die Beheizung des Klärschlammes auf.

Die Trocknung des Klärschlammes erfolgt durch Dampf, der dem Klärschlamm selbst entstammt. Damit der Dampf eine notwendige hohe Temperatur aufweist, wird er in einem Kompressor verdichtet und dadurch auf ein höheres Temperaturniveau gebracht. In der Anlaufphase des Verfahrens und zum Ausgleich von Wärmeverlusten ist die Einspeisung von Frischdampf möglich. Kondensat, das sich aus dem Dampf nach der Abgabe von Wärmeenergie an den Klärschlamm abscheidet, wird aufgefangen. Die Wärmeenergie dieses Kondensats wird dem Klärschlamm in einer Vorstufe des Verfahrens noch vor der Trocknung zugeführt, um eine Vorentgasung des Klärschlammes zu unterstützen. Damit wird die durch die Kompression des Dampfes erzeugte Wärmeenergie zusätzlich für die Vorentgasung des Klärschlammes eingesetzt.

Mit dem Verfahren nach der Erfindung wird der Vorteil erzielt, daß mit einfachen Mitteln und fast ohne Zugabe zusätzlicher Stoffe eine weitgehende Trocknung von Klärschlamm zu erreichen ist. Die Trockenmasse, die mit dem erfindungsgemäßen Verfahren aus dem Klärschlamm gebildet wird, ist in üblichen Verbrennungsanlagen sofort ohne Zugabe von Brennstoffen verbrennbar. Es sind also zusätzliche Kosten verursachende Brennstoffe nicht erforderlich. Mit dem Verfahren zum Trocknen von Klärschlamm nach der Erfindung ist eine ohne Deponie auskommende wirtschaftliche Beseitigung von Klärschlamm durchführbar.

Falls das Kondensat brennbare Gase enthält, werden diese beispielsweise als Brennstoff zur Verbrennung oder zur weiteren Trocknung des Klärschlammes in einem Trocknungsofen eingesetzt.

Eine Einrichtung zur Durchführung des erfindungsgemäßen Verfahrens zum Trocknen von Klärschlamm sieht eine Eintragsschleuse für Klärschlamm vor, die mit einem Trocknungsreaktor in Verbindung steht. Der Trocknungsreaktor weist eine Austragsvorrichtung für getrockneten Klärschlamm auf. Außerdem ist der Trocknungsreaktor mit einer Abzugsventilation für während der Trocknung austretenden Dampf ausgestattet. Der Trocknungsreaktor enthält Wärmetauscherrohre mit Zuleitung und Ableitung. Die Abzugsventilation des Trocknungsreaktors ist über einen Kompressor mit der Zuleitung der Wärmetauscherrohre verbunden. Zur Durchführung des erfindungsgemäßen Verfahrens ist die Eintragsschleuse für Klärschlamm mit einer Vorrichtung zur Vorentgasung verbunden, die eine Mantelheizung aufweist. Der Ausgang der Vorrichtung zur Vorentgasung steht mit dem Trocknungsreaktor in Verbindung. Ausgehend von der Ableitung der Wärmetauscherrohre des Trocknungsreaktors ist eine Kondensatleitung vorhanden, die mit der Mantelheizung der Vorrichtung zur Vorentgasung in Verbindung steht. Nachdem der komprimierte Dampf die Wärmetauscherrohre durchströmt hat und dabei Wärmeenergie an den Klärschlamm im Trocknungsreaktor abgegeben hat, beträgt die Dampftemperatur immer noch zwischen 120°C und 160°C. Das anfallende Kondensat mit einer Temperatur von bis zu 100°C gelangt dann durch die Kondensatleitung zur Mantelheizung der Vorrichtung zur Vorentgasung. Dem Trocknungsreaktor wird dadurch weitgehend entgaster und auf ungefähr 60°C erwärmter Klärschlamm zugeleitet.

Damit wird der Vorteil erzielt, daß ohne Zugabe von Brennstoffen von außen Klärschlamm ausreichend getrocknet wird. Der Trocknungsreaktor ist beispielsweise ein Drehrohrreaktor. Dieser enthält ein Eintragsrohr, das von einem in einem Abstand angeordneten Rohrregister aus Wärmetauscherrohren umgeben ist. Der Klärschlamm gelangt von der einen Stirnseite des Drehrohrreaktors aus in das Eintragsrohr, wird durch das Eintragsrohr hindurch bewegt und gelangt im Gegenstrom durch die Zwischenraume zwischen Eintragsrohr und Rohrregister zur selben Stirnseite zurück. Dort ist der Zwischenraum mit einer Austragsvorrichtung für getrockneten Klärschlamm und mit einer Abzugsventilationsleitung für ausgetretenen Dampf verbunden. Die Austragsvorrichtung gibt das getrocknete Produkt ab, das beispielsweise einer Müllverbrennungsanlage zuführbar ist. Das Produkt kann auch einem Schwelbrennverfahren zugeführt werden oder Rohstoff für die Gewinnung von Öl aus Klärschlamm sein. Die Wärmetauscherrohre im Drehrohrreaktor sind von der anderen Stirnseite des Drehrohrreaktors her mit komprimiertem Dampf zu beschicken, der durch die Abzugsventilationsleitung über einen Kompressor dorthin gelangt. Die Wärmetauscherrohre sind paarweise im Gegenstrom mit komprimiertem Dampf zu beschicken. Nach Abgabe von Wärmeenergie an den Klärschlamm gelangen aus dem Dampf gebildetes Inertgas und Kondensat an derselben Stirnseite des Drehrohrreaktors, an der der Dampf zugeführt wird, aus dem Drehrohrreaktor wieder heraus. Mit einem derartig aufgebauten Drehrohrreaktor wird der Vorteil erzielt, daß ein guter Wärmeübergang vom komprimierten Dampf auf den Klärschlamm erfolgt. Dazu trägt auch die Drehbewegung des Drehrohrreaktors bei, die durch die in der Drehachse liegenden Zu- und Ableitungen ermöglicht wird.

Die Vorrichtung zur Vorentgasung ist beispielsweise ein Knetreaktor, der eine Zuleitung und eine Ableitung für Klärschlamm, eine Ableitung für Gase und eine Mantelheizung aufweist. Der Knetreaktor zeichnet sich aus durch mechanische Rührwerke und durch eine Pumpe in der Ableitung für Gase, die im Raum über dem Klärschlamm im Knetreaktor ein technisches Vakuum erzeugt. Durch die Mantelheizung, die beispielsweise mit dem Kondensat des komprimierten Dampfes, der den Trocknungsreaktor verläßt, betrieben wird, erfolgt eine Erwärmung des Klärschlammes. Mit dem Einsatz des Knetreaktors wird der Vorteil erzielt, daß der Klärschlamm durch Entgasung und Erwärmung für den Trocknungsreaktor vorbereitet wird, was zu einem weiter verbesserten Trocknungsergebnis führt, da weniger den Wärmeübergang störende Inertgase im Heizdampf vorhanden sind. Die über die Entgasungsleitung abgeleiteten Gase sind neben Luft Kohlenwasserstoffe, die brennbar sind und daher einer Verbrennungsanlage oder einem Trocknungsofen zugeführt werden können.

Vor dem Kompressor ist in der Abzugsventilation beispielsweise ein Filter eingesetzt. Dieses Filter kann ein mechanisches Filter oder ein Elektromagnetfilter sein. Mit dem Filter wird der dem Kompressor zuzuleitende Dampf gereinigt, um die erzielbare Kompression zu verbessern. Statt einem Filter ist auch eine Dampfwaschkolonne einsetzbar.

Die Zuleitung für die Wärmetauscherrohre im Drehrohrreaktor ist außer mit dem Kompressor beispielsweise auch mit einer Frischdampfleitung verbunden. Damit wird der Vorteil erzielt, daß, falls der aus dem Klärschlamm selbst stammende Dampf für die Trocknung nicht ausreichen sollte, Fremddampf zuführbar ist. Insbesondere ist die Zuleitung von Fremddampf bei der Inbetriebnahme der Einrichtung zum Trocknen von Klärschlamm erforderlich.

In der Abzugsventilationsleitung ist beispielsweise ein Zyklonabscheider angeordnet zum Abscheiden von mitgerissenen Feststoffpartikeln, die aus dem getrockneten Klärschlamm stammen. Nach einem anderne Beispiel ist die Abzugsventilationsleitung beheizt, um Kondensatbildung zu verhindern.

Mit dem erfindungsgemäßen Verfahren und mit der Einrichtung zur Durchführung dieses Verfahrens wird insbesondere der Vorteil erzielt, daß Klärschlamm in energetisch günstiger Weise für eine Verbrennung aufzubereiten ist.

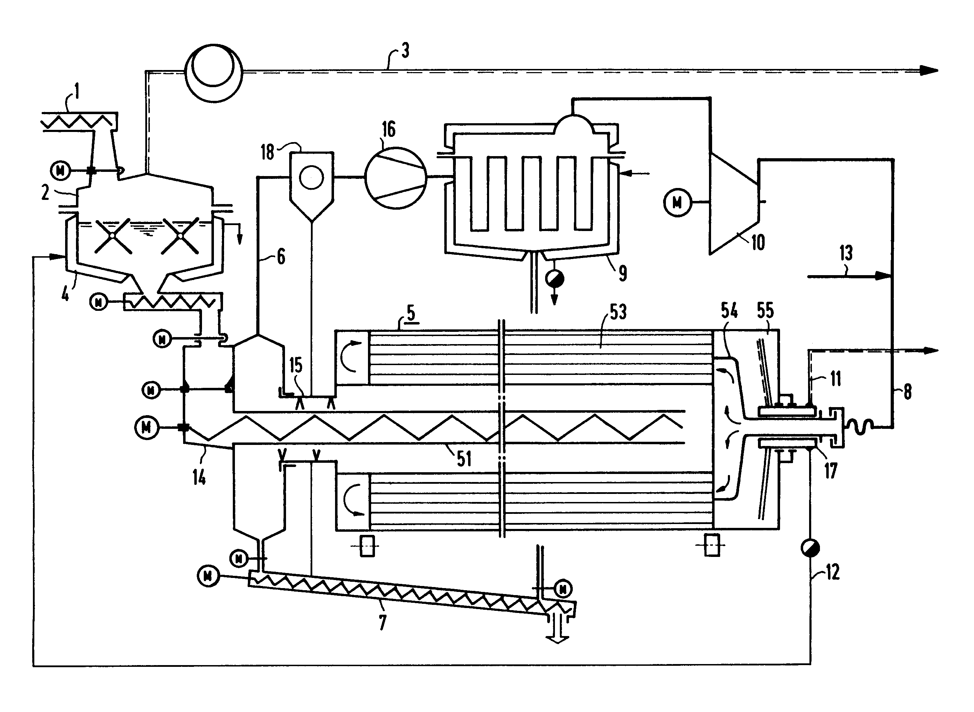

Die Erfindung wird an einem Ausführungsbeispiel anhand der Zeichnung näher erläutert:

Die Zeichnung zeigt ein Ausführungsbeispiel der erfindungsgemäßen Einrichtung zum Trocknen von Klärschlamm.

Eine Eintragsschleuse 1 für Klärschlamm ist mit dem Eingang einer Vorrichtung zur Vorentgasung in der Form eines Knetreaktors 2 verbunden. Von dort geht eine Ableitung 3 für Gase aus, die in einer Verbrennungseinrichtung mündet. Der Knetreaktor 2 ist mit einer Mantelheizung 4 ausgestattet. Ein Ausgang des Knetreaktors 2 für den vorbehandelten Klärschlamm ist mit der Zuleitung 14 eines Drehrohrreaktors 5 verbunden. Dort gelangt der Klärschlamm in ein Eintragsrohr 51, das von einem in einem Abstand angeordneten Rohrregister aus Wärmetauscherrohren 53 umgeben ist. Am Ende des Eintragsrohres 51 in Strömungsrichtung steht dieses mit den Zwischenräumen zwischen Eintragsrohr 51 und Rohrregister 53 in Verbindung. Die Ableitung 15 des Drehrohrreaktors 5 ist mit den Zwischenräumen verbunden und befindet sich wie der Eingang des Eintragsrohres 51 im Bereich der Achse des Drehrohrreaktors 5 an der gleichen Stirnseite. Der Klärschlamm gelangt durch das Eintragsrohr 51 und anschließend im Gegenstrom durch die Zwischenräume zwischen Eintragsrohr 51 und Rohrregister 53 zur Ableitung 15. Mit der Ableitung 15 ist eine Abzugsventilationsleitung 6 für aus dem Klärschlamm ausgetretenen Dampf und eine Austragsvorrichtung 7 für den getrockneten Klärschlamm verbunden. Zur Trennung des Dampfes vom Klärschlamm im Drehrohrreaktor 5 weist dieser das Rohrregister aus Wärmetauscherrohren 53 auf. Die Wärmetauscherrohre sind paarweise im Gegenstromprinzip mit heißem komprimiertem Dampf zu beschicken, wodurch ein Wärmeübergang vom Dampf auf den Klärschlamm erfolgt und dadurch der Klärschlamm getrocknet wird. Die Zuleitung 8 des Rohrregisters 53 für den Dampf und die als Ringraumhülse 17 ausgebildete Ableitung des Rohrregisters 53 sind im Bereich der Drehachse des Drehrohrreaktors 5 der Zuleitung 14 und der Ableitung 15 für den Klärschlamm gegenüberliegend angeordnet. Alle Zu- und Ableitungen 8, 17, 14 und 15 zum Drehrohrreaktor 5 sind mit gasdichten Durchführungen ausgestattet. Mit der Abzugsventilationsleitung 6 des Drehrohrreaktors 5 steht die Dampfzuleitung 8 des Drehrohrreaktors 5 über einen Zyklonabscheider 18, einen Ventilator 16, ein Filter 9 und einen durch einen Motor M angetriebenen Kompressor 10 in Verbindung. Der Kompressor 10 kann mit einem mittels Faulgas betriebenen Gasmotor, mit einer Turbine oder mit einem Elektromotor angetrieben sein. Die Auswahl richtet sich nach den örtlichen Voraussetzungen. Beispielsweise ist ein Antrieb mit Faulgas bei Vorhandensein von Faultürmen einer Kläranlage sinnvoll. Der Zyklonabscheider 18 ist mit der Austragsvorrichtung 7 verbunden. Durch ihn werden mitgerissene Feststoffpartikel abgeschieden. Zur Verhinderung einer Kondensatbildung kann die Abzugsventilationsleitung 6 beheizt sein. Der aus dem Klärschlamm im Drehrohrreaktor 5 entfernte Dampf wird gereinigt, gefiltert und im Kompressor 10 komprimiert, wodurch der Druck und damit die Temperatur stark zunimmt. Der komprimierte, erhitzte Dampf gibt über das Rohrregister aus Wärmetauscherrohren 53 Wärmeenergie zur Trocknung des Klärschlammes im Drehrohrreaktor 5 ab. Die Ringraumhülse 17 besteht aus zwei Halbschalen, mit denen getrennt voneinander eine Inertgasableitung 11 und eine Kondensatableitung 12 des Rohrregisters 53 des Drehrohrreaktors 5 verbunden sind.

Der Drehrohrreaktor 5 ist schräg angeordnet oder konisch gestaltet, so daß der Klärschlamm in den Zwischenräumen zwischen Eintragsrohr 51 und Rohrregister 53 allein durch Einwirkung der Schwerkraft bewegt wird. In das Eintragsrohr 51 wird der Klärschlamm mittels einer Förderschnecke eingeführt. Entsprechend befinden sich in der Eintragsschleuse 1 und in der Verbindung zwischen Knetreaktor 2 und Drehrohrreaktor 5 ebenfalls Förderschnecken. Das System aus Eintragsrohr 51 und Zwischenräumen zwischen Eintragsrohr 51 und Rohrregister 53 weist einen leichten Unterdruck gegenüber dem Außendruck auf. Die Zuführung des komprimierten Dampfes aus der Dampfzuleitung 8 in das Rohrregister aus Wärmetauscherrohren 53 des Drehrohrreaktors 5 erfolgt über einen Dampfdom 54, der im Drehrohrreaktor 5 innenliegende Wärmetauscherrohre mit Dampf versorgt. Nach Durchströmen dieser Wärmetauscherrohre tritt der Dampf auf der Gegenseite aus, wird umgelenkt und gelangt durch äußere Wärmetauscherrohre in einen Raum 55 an der Außenseite des Dampfdomes 54. Mit diesem Raum 55 ist die Ringraumhülse 17 verbunden, die im Bereich der Durchführung durch die Wand des Drehrohrreaktors 5 die Dampfzuführung 8 umschließt. Die Ringraumhülse 17 steht mit der Inertgasableitung 11 und mit der Kondensatableitung 12 in Verbindung.

Die Kondensatableitung 12 speist die Mantelheizung 4 des Knetreaktors 2. Die Temperatur des Kondensats reicht für eine Vorentgasung des Klärschlammes im Knetreaktor 2 aus. Erst dadurch erreicht der verdichtete Dampf aus der Trocknung ein ausreichendes Temperaturniveau und eine ausreichende Wärmeübertragungsleistung, die für eine Beheizung des Klärschlammes erforderlich sind.

## Patentansprüche

1. Verfahren zum Trocknen von Klärschlamm, wobei beim Trocknen des Klärschlammes entweichender Dampf abgeleitet und einem Kompressor (10) zugeleitet wird und wobei Wärmeenergie des komprimierten und dadurch erhitzten Dampfes dem zu trocknenden Klärschlamm über ein Wärmetauschersystem zugeführt und dort Kondensat abgeleitet wird,
**dadurch gekennzeichnet**, daß vor dem Trocknen selbst eine Vorentgasung stattfindet und daß das Kondensat aufgefangen wird und daß Wärmeenergie des Kondensates zur Unterstützung dieser Vorentgasung dem Klärschlamm vor der Trocknung zugeführt wird.

2. Verfahren nach Anspruch 1, **dadurch gekennzeichnet,** daß im Kondensat vorhandene brennbare Gase separiert und zur Wärmegewinnung verbrannt werden.

3. Einrichtung zur Durchführung des Verfahrens nach einem der Ansprüche 1 oder 2, **dadurch gekennzeichnet,** daß eine Eintragsschleuse (1) für Klärschlamm mit einem Trocknungsreaktor, insbesondere mit einem Drehrohrreaktor (5), in Verbindung steht, dessen Ableitung (15) mit einer Austragsvorrichtung (7) für getrockneten Klärschlamm und mit einer Abzugsventilationsleitung (6) für ausgetretenen Dampf verbunden ist, und der ein Rohrregister aus Wärmetauscherrohren (53) mit Zuleitung (8) und Ableitungen (11, 12) enthält, daß die Abzugsventilationsleitung (6) über einen Kompressor (10) mit der Zuleitung (8) der Wärmetauscherrohre (53) verbunden ist, daß die Eintragsschleuse (1) mit einer Vorrichtung zur Vorentgasung, insbesondere mit einem Knetreaktor (2), verbunden ist, die eine Mantelheizung (4) aufweist, daß die Vorrichtung zur Vorentgasung mit dem Trocknungsreaktor verbunden ist, und daß mit einer Kondensatableitung (12) des Rohrregisters aus Wärmetauscherrohren (53) des Trocknungsreaktors die Mantelheizung (4) der Vorrichtung zur Vorentgasung in Verbindung steht.

4. Einrichtung nach Anspruch 3, **dadurch gekennzeichnet,** daß der Trocknungsreaktor ein Drehrohrreaktor (5) ist, welcher ein Eintragsrohr (51) und ein Rohrregister aus Wärmetauscherrohren (53) enthält, wobei das System aus dem Eintragsrohr (51) und den Zwischenräumen zwischen dem Eintragsrohr (51) und dem Rohrregister (53) von der einen Stirnseite des Drehrohrreaktors (5) her axial mit Klärschlamm zu beschicken ist, und wobei die Wärmetauscherrohre (53) des Rohrregisters von der anderen Stirnseite des Drehrohrreaktors (5) her axial paarweise mit komprimiertem Dampf zu beschicken sind.

5. Einrichtung nach einem der Ansprüche 3 oder 4, **dadurch gekennzeichnet,** daß die Vorrichtung zur Vorentgasung ein Knetreaktor (2) ist, der eine Knetvorrichtung enthält, und der eine Zuleitung und eine Ableitung für Klärschlamm, eine Ableitung (3) für Gase und eine Mantelheizung (4) aufweist.

6. Einrichtung nach einem der Ansprüche 3 bis 5, **dadurch gekennzeichnet,** daß dem Kompressor (10) ein mechanisches Filter (9) vorgeschaltet ist.

7. Einrichtung nach einem der Ansprüche 3 bis 5, **dadurch gekennzeichnet,** daß dem Kompressor (10) ein Elektromagnetfilter oder eine Dampfwaschkolonne vorgeschaltet ist.

8. Einrichtung nach einem der Ansprüche 3 bis 7, **dadurch gekennzeichnet,** daß in die Dampfzuleitung (8) für das Rohrregister aus Wärmetauscherrohren (53) einmündend eine Frischdampfleitung (13) angeordnet ist.

9. Einrichtung nach einem der Ansprüche 3 bis 8, **dadurch gekennzeichnet,** daß in der Abzugsventilationsleitung (6) ein Zyklonabscheider (18) für mitgerissene Feststoffpartikel aus getrocknetem Klärschlamm angeordnet ist.

10. Einrichtung nach einem der Ansprüche 3 bis 9, **dadurch gekennzeichnet,** daß die Abzugsventilationsleitung (6) beheizt ist.

## Claims

1. Method for drying sewage sludge, in which steam escaping during drying of the sewage sludge is diverted and supplied to a compressor (10), and in which thermal energy from the compressed and therefore heated steam is supplied by way of a heat exchanger system to the sewage sludge to be dried, and condensate is drawn off there, characterised in that, before the drying itself, a preliminary degassing takes place, and in that the condensate is collected, and in that thermal energy from the condensate is supplied to the sewage sludge before drying, for aiding this preliminary degassing.

2. Method according to claim 1, characterised in that combustible gases present in the condensate are separated and burnt for the recovery of heat.

3. Device for carrying out the method according to one of claims 1 or 2, characterised in that an input gate (1) for sewage sludge is connected to a drying reactor, in particular a rotary reactor (5), the outlet line (15) of which is connected to a discharge apparatus (7) for dried sewage sludge and to an exhaust vent line (6) for emerging steam, and which comprises a bank of heat exchanger tubes (53) having a supply line (8) and outlet lines (11, 12), in that the exhaust vent line (6) is connected by way of a compressor (10) to the supply line (8) of the heat exchanger tubes (53), in that the input gate (1) is connected to an apparatus for preliminary degassing, in particular a kneading reactor (2) which has a jacket heater (4), in that the apparatus for preliminary degassing is connected to the drying reactor, and in that the jacket heater (4) of the apparatus for preliminary degassing is connected to a condensate outlet line (12) of the bank of heat exchanger tubes (53) of the drying reactor.

4. Device according to claim 3, characterised in that the drying reactor is a rotary reactor (5) which comprises an input tube (51) and a bank of heat exchanger tubes (53), whereby the system consisting of the input tube (51) and the interspaces between the input tube (51) and the bank of tubes (53), is to be supplied axially with sewage sludge from the one end of the rotary reactor (5), and whereby the heat exchanger tubes (53) of the bank of tubes are to be supplied axially with compressed steam in pairs from the other end of the rotary reactor (5).

5. Device according to one of claims 3 or 4, characterised in that the apparatus for preliminary degassing is a kneading reactor (2) which comprises a kneading apparatus and has a supply line and an outlet line for sewage sludge, an outlet line (3) for gases and a jacket heater (4).

6. Device according to one of claims 3 to 5, characterised in that a mechanical filter (9) is connected upstream of the compressor (10).

7. Device according to one of claims 3 to 5, characterised in that an electromagnetic filter or a steam scrubbing column is connected upstream of the compressor (10).

8. Device according to one of claims 3 to 7, characterised in that a fresh steam line (13) is arranged so that it opens into the steam supply line (8) for the bank of heat exchanger tubes (53).

9. Device according to one of claims 3 to 8, characterised in that there is arranged in the exhaust vent line (6) a cyclone separator (18) for solid particles of dried sewage sludge which are carried along.

10. Device according to one of claims 3 to 9, characterised in that the exhaust vent line (6) is heated.

## Revendications

1. Procédé de séchage de boues de curage, de la vapeur se dégageant lors du séchage de la boue de curage étant évacuée et envoyée à un compresseur (10) et de l'énergie calorifique de la vapeur comprimée et ainsi réchauffée étant apportée à la boue de curage à sécher par un système à échangeur de chaleur et du produit condensé y étant évacué,
caractérisé en ce qu'avant le séchage lui-même a lieu un pré-dégazage et en ce que le produit condensé est collecté et en ce que l'énergie calorifique du produit condensé est envoyée, pour favoriser ce pré-dégazage, à la boue de curage avant le séchage.

2. Procédé suivant la revendication 1, caractérisé en ce que des gaz combustibles présents dans le produit condensé sont séparés et sont brûlés pour récupérer de la chaleur.

3. Installation pour la mise en oeuvre du procédé suivant l'une des revendications 1 ou 2, caractérisée en ce qu'un sas (1) d'entrée de la boue de curage communique avec un réacteur de séchage, notamment avec un réacteur (5) tubulaire tournant, dont la sortie (15) communique avec un dispositif de déchargement (7) de la boue de curage séchée et avec un conduit (6) d'évacuation par ventilation de la vapeur qui sort et qui comporte un registre de tubes (53) échangeurs de chaleur ayant un conduit d'entrée (8) et des conduits de sortie (11, 12), en se que le conduit (6) d'évacuation par ventilation communique, par un compresseur (10), avec le conduit (8) d'entrée des tubes (53) d'échangeur de chaleur, en ce que le sas (1) d'entrée communique avec un dispositif de pré-dégazage, notamment avec un réacteur (2) de pétrissage, qui comporte un chauffage (4) sur sa face latérale, en ce que le dispositif de pré-dégazage communique avec le réacteur de séchage, et en ce que le dispositif de chauffage (4) de la face latérale du dispositif de pré-dégazage communique avec un conduit d'évacuation (12) du produit condensé du registre de tubes (53) d'échangeur de chaleur du réacteur de séchage.

4. Installation suivant la revendication 3, caractérisée en ce que le réacteur de séchage est un réacteur (5) tubulaire tournant qui comporte un tube (51) d'entrée et un registre de tubes (53) d'échangeur de chaleur, le système constitué du tube (51) d'entrée et des intervalles compris entre le tube (51) d'entrée et le registre de tubes (53) étant alimenté axialement en boues de curage par l'un des côtés frontaux du réacteur (5) tubulaire tournant, les tubes (53) d'échangeur de chaleur du registre étant alimentés en vapeur comprimée axialement par couple par l'autre côté frontal du réacteur (5) tubulaire tournant.

5. Installation suivant l'une des revendications 3 ou 4, caractérisée en ce que le dispositif de pré-dégazage est un réacteur (2) de pétrissage, qui comporte un dispositif de pétrissage et qui présente un conduit d'entrée et un conduit de sortie de la boue de curage, un conduit d'évacuation (3) des gaz et un chauffage (4) de la face latérale.

6. Installation suivant l'une des revendications 3 à 5, caractérisée en ce qu'un filtre (9) mécanique est monté en amont du compresseur (10).

7. Installation suivant l'une des revendications 3 à 5, caractérisée en ce qu'un filtre électromagnétique ou une colonne de lavage de la vapeur est monté en amont du compresseur (10).

8. Installation suivant l'une des revendications 3 à 7, caractérisée en ce qu'il est prévu un conduit (13) de vapeur fraîche débouchant dans le conduit (8) d'entrée de la vapeur pour le registre de tubes (53) d'échangeur de chaleur.

9. Installation suivant l'une des revendications 3 à 8, caractérisée en ce que, dans le conduit (6) d'évacuation par ventilation, est monté un séparateur (18) à cyclone pour les particules de matière solide entrainées et constituées de boues de curage séchées.

10. Installation suivant l'une des revendications 3 à 9, caractérisée en ce que le conduit (6) d'évacuation par ventilation est chauffé.
